Europäisches Patentamt

European Patent Office

Office européen des brevets

(19)

(11) EP 0 770 585 A1

(12) DEMANDE DE BREVET EUROPEEN

(43) Date de publication:
02.05.1997 Bulletin 1997/18

(51) Int Cl.6: C04B 24/16

(21) Numéro de dépôt: 96402274.3

(22) Date de dépôt: 25.10.1996

(84) Etats contractants désignés:
BE ES FR GR IT

(30) Priorité: 27.10.1995 FR 9512684

(71) Demandeur: CIMENTS FRANCAIS
F-92800 Puteaux (FR)

(72) Inventeurs:
• Le Rolland, Bruno
78200 Mantes-la-Jolie (FR)

• Sestre, Guy
78930 Vert (FR)
• Defosse, Camille
78540 Vernouillet (FR)

(74) Mandataire: Loyer, Bertrand
Cabinet Loyer,
78, avenue Raymond Poincaré
75116 Paris (FR)

(54) **Additif pour contrôler la sédimentation des conglomérats**

(57) Additif anti-sédimentation pour conglomérats, caractérisé en ce qu'il est obtenu à partir d'une combinaison de Mg et d'adjuvant à effet dispersant. Ledit additif étant un sel de magnésium issu du produit de condensation entre l'acide bêta sulfonique et le formaldéhyde ; ou un sel de magnésium issu du produit de condensation entre la mélanine sulfonate et le formaldéhyde ou peut encore être issu d'une combinaison Mg-lignosulfonate.

Printed by Jouve, 75001 PARIS (FR)

## Description

La présente invention concerne un additif obtenu à partir d'une combinaison de Mg et d'adjuvant à effet dispersant, pour le contrôle de la sédimentation dans les conglomérats, en particulier des mortiers et des bétons.

Les conglomérats sont des matériaux de construction comprenant des granulats (sables, gravillons, cailloux) dispersés dans un composant de liaison ou liant, représenté en général par une pâte formée de ciment et d'eau. Les bétons et mortiers constituent des exemples typiques des conglomérats. Les mortiers sont des mélanges constitués d'eau, de granulats fins (sable) et de ciment ; les bétons sont des mélanges constitués de granulats fins (sable) de granulats bruts (gravillons et/ou cailloux) avec du ciment et de l'eau.

Outre l'eau, le ciment et les granulats, d'autres ajouts peuvent être utilisés dans la préparation des conglomérats : il peut s'agir de filler calcaire ou encore de fumées de silice. Il peut également s'agir de filler silico-calcaire, silico-alumineux ou alumineux.

Dans la présente invention on définira par "ciment" un matériau sec avant hydratation et par "pâtes cimentières" des pâtes constituées de ciment et d'eau et exemptes de granulats.

"L'ouvrabilité" ou "aptitude à être transformé" est une propriété très importante pour les matériaux cimentiers, tant pour les agglomérés que pour les pâtes de ciment et est exprimée en termes de fluidité et de plasticité (ou stabilité) du conglomérat.

La fluidité est inversement proportionnelle à la viscosité plastique et mesure l'aptitude à l'écoulement du conglomérat sous l'effet d'un cisaillement. Il est possible de mesurer la fluidité au moyen d'instruments tels que le cône de Marsh, le maniabilimètre ou le consistomètre qui mesurent le temps nécessaire à l'écoulement ou à la déformation d'une certaine quantité de conglomérat. Il est aussi possible de mesurer l'amplitude de la déformation dans l'espace, au moyen de tests tels que le "test d'écoulement" (flow-test) ou le "test d'affaissement" (slump-test), qui sont illustrés plus loin dans la présente description.

La plasticité, ou stabilité, est la capacité du conglomérat à rester homogène, c'est-à-dire la facilité avec laquelle un conglomérat peut être modelé ou déformé, sans que ne se produise une sédimentation des composants, et elle est principalement due à l'homogénéité de la distribution de l'eau, qui est le composant le plus mobile. Dans la présente description, l'expression "sédimentation" définit tous les phénomènes donnant lieu à une perte d'homogénéité d'un matériau à base de ciment (conglomérat ou pâte cimentière). De plus, ce n'est pas seulement la valeur de la capacité de mise en oeuvre du matériau à base de ciment fraîchement préparé qui est importante, mais également et surtout la variation de cette capacité de mise en oeuvre au cours du temps. Après mélange des composants du conglomérat, la viscosité puis le durcissement du conglomérat frais augmente avec le temps, du fait de la réaction d'hydratation du ciment, ceci provoque une réduction de la fluidité et, en conséquence, de la capacité de transformation ou mise en oeuvre des bétons.

Cette propriété aboutit à des difficultés de livraison des conglomérats frais, comme c'est le cas pour la plus grande partie des bétons qui sont préparés en usine par mélange des composants, puis acheminés au moyen de véhicules adéquats. Une telle réduction de fluidité crée aussi des inconvénients dans le cas des bétons ou des pâtes cimentières qui doivent être pompés ou injectés puisqu'ils comportent un risque de durcissement pendant ces opérations.

La capacité du système à rester homogène est également importante pour des bétons qui doivent être transportés pendant de longues durées avant d'être utilisés ou qui doivent être pompés ou injectés, afin d'éviter une inhomogénéité indésirable des composants du conglomérat avant pendant et après la pose. Par exemple le phénomène de ressuage représente la cause principale du retrait lors du séchage, soit avant, soit après la pose du béton. Il correspond à une mobilité trop élevée de l'eau vers la surface du conglomérat, avec pour conséquence l'évaporation. Il s'en suit par exemple la fissuration des plaques de béton soumises à des conditions d'assèchement prononcées avant la pose sur le site.

Il est connu d'utiliser des adjuvants pour améliorer la capacité de mise en oeuvre des conglomérats et des pâtes cimentières.

Le brevet GB-A-2 057 418 décrit l'utilisation de sels de baryum, de magnésium, de fer ou d'aluminium issus des produits de condensation de l'acide B-naphtalène sulfonique et du formaldéhyde en tant que fluidifiants pour bétons aptes à empêcher la perte d'affaissement desdits bétons au cours du temps.

Le brevet EP-A-307 997 décrit l'utilisation du Mg-PNS (polynaphtalène sulfonate) en tant qu'adjuvant apte à contrôler le phénomène de surdispersion qui a pour conséquence la formation au sommet de la colonne de ciment d'une phase surnageante plus ou moins limpide et due à la sédimentation des particules de ciment, toutefois ledit document concerne l'ajout de Mg-PNS sous forme solide pour des pâtes cimentières spéciales, conçues pour la cimentation des puits pétrolifères et autres types de puits.

De plus il est connu d'ajouter des sels de sodium ou calcium issus du produit de condensation de l'acide béta-naphtalène sulfonique et du formaldéhyde.

Comme on peut le déduire des essais comparatifs réalisés par la demanderesse et rapportés ci-dessous, l'ajout de sels de sodium ou de calcium issus du produit de condensation de l'acide béta-naphtalène sulfonique et du formaldéhyde (Na-PNS et Ca-PNS) à des conglomérats accroît la fluidité, mais entraîne simultanément une instabilité. En d'autres termes, avec Na-PNS et Ca-PNS, il est souvent rencontrée une ségrégation de la phase aqueuse, lorsque ces adjuvants sont utilisés en excès dans des mortiers et des bétons, tout comme une sédimentation des granulats dont sont composés les bétons. L'ajout au fluidifiant d'un deuxième adjuvant possédant des caractéristiques d'épaississant, tel que l'hydroxyéthylcellulose, donne lieu à une réduction du phénomène de sédimentation tout en maintenant des niveaux de fluidité acceptables. Néanmoins un dosage adéquat de l'hydroxyéthylcellulose est nécessaire.

En général, les additifs tels que Na-PNS et Ca-PNS, utilisés comme fluidifiants dans des matériaux à base de ciment donnent des niveaux trop élevés de sédimentation. Ils sont généralement utilisés en association avec d'autres adjuvants capables de réduire cette sédimentation, comme par exemple $NiCl_2$, qui est de plus nocif pour l'environnement.

La demanderesse a trouvé de façon surprenante que le produit issu d'une combinaison Mg et adjuvant à effet dispersant, s'avère être un additif anti-sédimentation efficace pour des conglomérats puisque, pour des concentrations pour lesquelles il est observé un effet dispersant (fluidifiant) satisfaisant (sensiblement analogue à celui obtenu avec Na-PNS ou Ca-PNS), le produit issu d'une combinaison Mg-adjuvant à effet dispersant est capable de contrôler le niveau de sédimentation du système, permettant ainsi une diminution significative et satisfaisante du phénomène de sédimentation par comparaison à des conglomérats contenant Na-PNS ou Ca-PNS qui s'avèrent être inefficaces de ce point de vue et ceci, sans qu'il ne soit besoin d'ajouter d'autres adjuvants au système.

En d'autres termes, le produit issu d'une combinaison Mg-adjuvant à effet dispersant est un adjuvant anti-sédimentation puisque, pour des concentrations pour lesquelles il agit comme dispersant en permettant une fluidification satisfaisante, il diminue la sédimentation à des niveaux acceptables, inférieurs à 1% en volume. En particulier, le produit issu d'une combinaison Mg-adjuvant à effet dispersant présente un effet dispersant sensiblement analogue à celui de Na-PNS et de Ca-PNS, mais il fournit des conglomérats présentant des valeurs de sédimentation (ségrégation) réduites par rapport à des conglomérats contenant Na-PNS et Ca-PNS.

L'expression "agent anti-sédimentation" signifie ici un composé capable de réduire la tendance du système à la sédimentation, cette expression couvrant le phénomène de ségrégation de l'eau (eau libre ou ressuage), tout comme la formation des strates superficielles sensiblement dépourvues de granulats.

La présente invention a pour objet d'utiliser Mg-adjuvant à effet dispersant en tant qu'additif anti-sédimentation pour les conglomérats. Cet additif ayant un effet dispersant satisfaisant (fluidifiant) tout en contrôlant le niveau de sédimentation du système.

La présente invention concerne un additif anti-sédimentation pour conglomérats, caractérisé en ce qu'il est obtenu à partir d'une combinaison de magnésium et d'adjuvant à effet dispersant.

Ledit additif est un sel de magnésium issu du produit de condensation entre l'acide béta-naphtalène-sulfonique et le formaldéhyde (PNS) ou entre la mélamine sulfonée et le formaldéhyde (PMS) ou une combinaison entre Mg et lignosulfonate (Mg-LNS) ou toute combinaison Mg-adjuvant à effet dispersant.

L'additif Mg-adjuvant à effet dispersant est généralement utilisé dans des proportions allant de 0,1 à 4% et de préférence de 0,2 à 1,5% en poids du ciment.

Pour des mortiers l'additif Mg-adjuvant à effet dispersant est utilisé dans des proportions comprises entre 0,3 et 1,5% en poids du ciment.

La teneur en additif Mg-adjuvant à effet dispersant est alors d'au moins 1% pour des concentrations en eau libre inférieures à 1% en volume.

Lorsque l'on utilise des bétons, l'additif Mg-adjuvant à effet dispersant est utilisé dans des proportions comprises entre 0,3 et 1,25 % en poids du ciment.

L'additif Mg-adjuvant à effet dispersant est rajouté sous forme liquide après réalisation d'une phase de malaxage particulièrement pour des bétons.

L'additif Mg-adjuvant à effet dispersant peut être mélangé à l'état sec à l'un des composants solides du conglomérat, en particulier au ciment.

L'additif Mg-adjuvant à effet dispersant peut encore être incorporé sous forme de poudre.

Selon un autre mode de réalisation particulièrement pour les mortiers, l'additif Mg-adjuvant à effet dispersant peut être ajouté à l'eau de gâchage pour être ensuite mélangé aux autres composants.

Lorsque l'additif Mg-adjuvant à effet dispersant est mélangé à l'état sec, il présente une granulométrie comprise entre 0,1 et 500 microns et de préférence entre 0,1 et 100 microns.

Lorsque l'additif Mg-adjuvant à effet dispersant est mélangé à l'état liquide particulièrement sous forme d'une solution aqueuse, il présente une concentration comprise entre 10 et 60% en poids et de préférence de 30% en poids par rapport au poids de la solution.

Selon la présente invention, les ciments peuvent être de type quelconque par exemple des ciments appelés "normaux", suivant la norme européenne en préparation EN 197-1 (de type I, II, III, IV et V). Des exemples de tels ciments sont : le ciment Portland ordinaire et tout autre ciment aux ajouts (Portland composé, pouzzolanique, de haut fourneau, aux laitiers et aux cendres) ; le ciment alumineux ou le ciment employé pour les barrages de retenue ; ou des ciments spéciaux, tels que des ciments à faible chaleur d'hydratation, ou encore des ciments résistants aux sulfates.

Des exemples de ciments disponibles dans le commerce et susceptibles d'être utilisés dans le cadre de la présente invention sont le ciment CPA 55 CP2ET (Gaurain, Compagnie des Ciments Belges), et le ciment CPA 55 (Villiers au Boin) qui entrent dans les ciments de type CPA CEM I (NF P15-301 (1994)).

Aux fins de la présente invention, on peut utiliser les granulats précités ou tout autre type de granulat défini par la norme ASTM C 33-93.

Aux fins de la présente invention, le mortier contient au moins 40% en poids de granulat (ou présente un rapport pondéral ciment-granulat d'au moins 0,10), et le béton contient au moins 60% en poids de granulat (ou présente une rapport pondéral c)ment-granulat d'au moins 0,10), les pourcentages étant basés sur le poids total du conglomérat.

De préférence, dans le mortier le rapport pondéral ciment-granulat varie de 0,10 à 0,40 et le rapport pondéral eau/ ciment de 0,2 à 1.

De manière préférée, dans le béton, le rapport pondéral ciment-granulat varie de 10% à 30% et le rapport eau/ ciment de 0,2 à 1.

Aux fins de la présente invention, le granulat fin comprend des particules de dimensions comprises entre 80μm et 6,30mm. Typiquement, le granulat fin est du sable siliceux, avec une teneur minimale en silice de 90%.

Le granulat grossier utilisé aux fins de la présente invention est n'importe quel granulat dont les particules présentent des dimensions supérieures à 6,3 mm. Dans le cas du béton, on peut par exemple utiliser en même temps que le sable, des mélanges de gravillons présentant un diamètre de particules compris entre 5 et 15 mm, et de gravillons présentant un diamètre particulaire compris entre 15 et 25 mm.

Les conglomérats auxquels la présente invention s'applique sont préparés par des méthodes traditionnelles de malaxage.

Selon un mode de réalisation typique de la présente invention, l'ajout d'additif Mg-adjuvant à effet dispersant au conglomérat, tout comme la préparation des conglomérats eux-mêmes par mélange de leurs composants, est réalisé typiquement à la température ambiante (+20 à +25°C) et à pression atmosphérique, mais elles peuvent d'une façon plus générale être réalisées à des températures comprises entre 5°C et 40°C.

Selon un procédé typique pour la préparation des mortiers, on ajoute à l'eau de gâchage le ciment et éventuellement la charge (filler). Le malaxage est ensuite démarré et le sable est ajouté. On continue ensuite à malaxer.

Typiquement, l'additif Mg-adjuvant à effet dispersant est ajouté sous forme solide à l'eau de gâchage avant le début de la préparation du mortier, dans lequel il se dissout en quelques secondes, le malaxage est ensuite démarré puis sont ajoutés les autres composants du mortier selon le même procédé que celui décrit ci-dessus.

Selon un procédé typique de préparation du béton, le granulat grossier est introduit dans le récipient de malaxage, suivi par la moitié du sable, le ciment et, éventuellement, la charge (filler), suivi par le reste du sable, les composants sont malaxés et on ajoute ensuite l'eau de gâchage et le mélange ainsi obtenu est mis sous forme de pâte.

Comme on le voit ci-dessus, selon un mode de réalisation préférée de la présente invention, on ajoute au béton déjà malaxé, une solution aqueuse d'additif Mg-adjuvant à effet dispersant, et on poursuit le malaxage pendant un temps supplémentaire.

Comme spécifié ci-dessus, l'additif Mg-adjuvant à effet dispersant peut également être ajouté à différentes étapes de préparation du béton, par exemple en réalisant un pré-mélange à l'état sec du ciment, avant de préparer le béton, ou, également, en l'ajoutant à l'eau de gâchage.

Selon un mode de réalisation de la présente invention, le mortier présente un rapport pondéral eau/ciment (E/C), variant de 0,2 à 1, typiquement de 0,3 à 0,7 et un rapport pondéral ciment/sable variant de 0,1 à 0,4, typiquement de 1/3. Dans la présente description, tous les rapports pondéraux sont basés sur les composants individuels à l'état sec.

Les exemples ci-après sont donnés à titre illustratif et non limitatif.

L'additif utilisé est un sel de magnésium issu du produit de condensation entre l'acide béta-naphtalène sulfonique et le formaldéhyde. Le sel de magnésium résulte de la neutralisation de la fraction acide obtenue après condensation par $Mg(OH)_2$ ajouté sous forme pulvérulente jusqu'à obtention d'une valeur de pH comprise entre 6,2 et 7,8. Dans tous les exemples donnés, l'additif issu du produit décrit ci-dessus sera appelé pour plus de simplification Mg-PNS.

Les essais illustrés ci-après permettent de mieux comprendre l'invention.

**EXEMPLE 1 :** Tableaux n° 1 et 2

Ces deux tableaux N° 1 et 2 donnent les résultats des essais de mesure de la teneur en eau libre effectués en utilisant des tubes cylindriques en plexiglass transparent de diamètre intérieur égal à 92 mm et d'une hauteur de 500 mm. Le mortier est préparé à base de ciment CPA 55 CP2ET (Gaurain, Compagnie des Ciments Belges) et de sable normalisé CEN présentant une teneur minimale en silice de 98%.

Le tableau 1 est un essai effectué selon un rapport pondéral eau sur ciment E/C de 0,5 (1% en poids additif) et avec une quantité d'adjuvant Mg-PNS de 1 % en poids d'adjuvant sec par rapport au poids du ciment à l'état sec.

Le tableau N° 2 est un essai effectué selon un rapport pondéral eau sur ciment E/C de 0,6 et avec des quantités d'adjuvants Mg-PNS et Ca-PNS exprimées en % en poids d'adjuvant sec par rapport au poids du ciment à l'état sec.

Le rapport ciment/sable C/S est maintenu à 1/3 pour tous les échantillons de mortier.

L'adjuvant est introduit sous forme de poudre de granulométrie < à 80 µm dans l'eau de gâchage. Conformément à la norme NF en 196-1 on ajoute à l'eau de formation du mélange, la quantité de ciment nécessaire puis après 30 secondes de mélange à vitesse réduite, on ajoute le sable siliceux.

**EXEMPLE 2 :** Tableau n° 3

Ce tableau N° 3 donne des mesures de l'étalement lors de l'essai d'écoulement en fonction de la concentration en additif.

Le rapport pondéral eau/ciment E/c est de 0,5 et le rapport ciment/sable (C/S) est de 1/3. Les additifs testés Mg-PNS et Na-PNS sont en concentrations égales à 0,5 ; 1,0 et 1,25% en poids du ciment, ils sont introduits sous forme de poudre dans l'eau de gâchage.

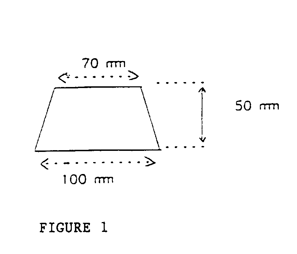

L'effet fluidifiant est évalué au moyen du "test d'étalement" (flow-test) (figure 1) qui n'est pas normalisé. On verse le mortier dans un cône d'étalement adéquat.

**EXEMPLE 3 :** Tableaux N° 4 et 5

Le tableau N° 4 concerne une composition de mortier ne contenant pas d'adjuvant et le tableau N° 5 met en évidence les valeurs d'étalement du test d'écoulement en (mm) ainsi que les facteurs de sédimentation F.

Les adjuvants utilisés sont Mg-PNS, Ca-PNS et un mélange Ca-PNS + 0,15% de HEC (hydroxyéthyl-cellulose).

Les proportions d'adjuvants sont exprimées en % en poids de solution aqueuse par rapport au poids du ciment.

Les adjuvants sont introduits dans l'eau de gâchage sous forme d'une solution aqueuse présentant une concentration en matière active égale à 30 % en poids par rapport au poids de la solution aqueuse.

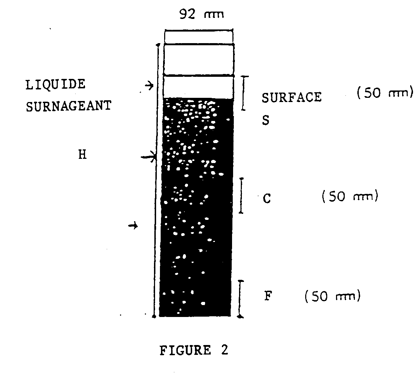

Pour évaluer le facteur de sédimentation, on verse le mortier préparé dans un tube de plexiglas (voir figure 2) d'une hauteur H de 500 mm et d'un diamètre de 26 mm et on mesure les variations de densité le long de la colonne après 24 Heures et en 3 points (surface S, centre C et fond F), sur une distance de 50 mm pour chaque point, la sédimentation est ensuite définie à partir du facteur F :

$$F = \frac{d\,(fond)\,-d(surface}{d\,(centre)}$$

Dans le cas ou un liquide surnageant s'est formé à la fin des 24 heures, la mesure de la densité à la surface tient compte de la masse de liquide surnageant, qui s'étend par exemple sur une hauteur de X mm. La colonne de ciment durcie sur laquelle sera effectuée la mesure s'étend donc sur (50 -X) mm afin de respecter les 50 mm de mesure. Le tube de plexiglass vide de 50 mm est supposé avoir une masse constante m = 10,82 g avec un volume interne constant égal à 26,53cm$^3$.

Après avoir calculé la densité sur toute la colonne de ciment (la masse m de la colonne vide est calculée à partir de la formule m = 10,82h/50 ou h est la hauteur de la colonne en mm, les trois portions de la colonne sont découpées par sciage ce qui permet de mesurer la densité à la surface, au centre et au fond. Il s'agit de calculer la densité après avoir pesé les échantillons.

**EXEMPLE 4 :** Tableaux 6, 7 et 8

Le tableau N° 6 indique les compositions d'un béton fluide spécial pour le bâtiment.

Le procédé pour préparer ledit béton est le suivant :

1/ Introduction des gravillons (gros granulats)
2/ Introduction de la moitié du sable, du ciment et du filler puis du reste du sable
3/ Malaxage pendant 3mn 30 avec introduction de l'eau de gâchage après 30sec de malaxage
4/ Ajout de l'adjuvant (s'il n'a pas déjà été introduit dans le ciment ou dans l'eau de gâchage préalablement) à la fin du malaxage
5/ Malaxage pendant 2mn supplémentaires.

On a utilisé en tant qu'additif témoin le Ca-PNS. De façon générale l'additif est introduit dans le béton à différent moments de sa préparation, soit avant, par pré-mélange à sec avec le ciment, soit dans l'eau de gâchage, soit à la fin du malaxage et dans ce dernier cas, une cinquième phase de malaxage est réalisée.

Le tableau 7 permet d'évaluer la sédimentation des éprouvettes de béton.

Les quantités d'additif Mg-PNS, Ca-PNS sont exprimées en % en poids de solution aqueuse par rapport au poids du ciment. Lorsqu'on ajoute l'additif sous forme liquide, celui-ci est préalablement versé dans l'eau pour produire une concentration de 30% (en poids/poids) pour être ensuite ajouté à l'eau de gâchage définie précédemment.

L'évaluation de la sédimentation est faite de façon qualitative au moyen du test dit des "éprouvettes fendues" on prépare des éprouvettes cylindriques (diamètre 16, hauteur 32 cm) vibrées sur table vibrante pendant 20 sec et que l'on laisse durcir pendant 1 semaine environ. Elles sont ensuite fendues longitudinalement afin de vérifier visuellement si il y a ou non ségrégation des constituants du béton en présence d'une couche superficielle dépourvue de granulats.

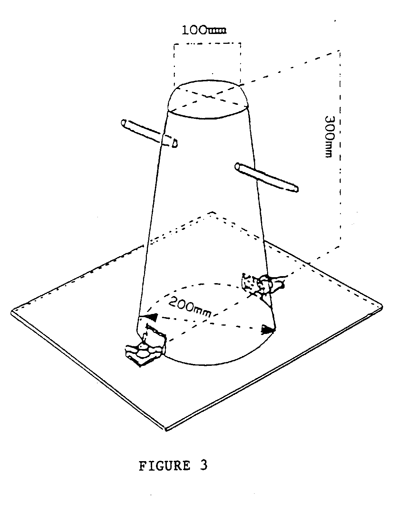

Le tableau 8 est un test de vérification de l'effet fluidifiant de Mg-PNS avec les concentrations et selon les modalités d'ajout exprimées dans le tableau 7 et en utilisant le cône d'Abrams (figure 3).

L'exemple 1 (tableaux N° 1 et 2) montre que pour un rapport E/C de 0,5 l'utilisation de 1% de Mg-PNS permet d'éliminer presque complètement le phénomène de sédimentation, portant sur des teneurs en eau libre inférieures à 1% en volume et égales environ à 1/3 de celles que l'on observe des quantités égales de Na-PNS.

L'exemple 2 (tableau N° 3) permet de voir que l'effet fluidifiant est comparable dans les deux cas étudiés et que Mg-PNS est un bon superplastifiant à l'égal au Na-PNS.

L'exemple 3 (tableaux N° 4 et 5) permet de mettre en évidence que le remplacement de Ca-PNS par une quantité identique de Mg-PNS seul, sans aucun agent d'épaississement, conduit à obtenir un mortier présentant une bonne valeur du facteur de sédimentation ou égale à celle obtenue avec le mélange Ca-PNS + HEC mais présentant une valeur d'étalement supérieure lors du test d'étalement (Flow-test).

L'exemple 4 (tableau 8) indique que pour des concentrations pour lesquelles Mg-PNS exerce un effet anti-sédimentation, il exerce également un effet fluidifiant dans le béton, produisant des valeurs de l'affaissement (slump) d'environ 20cm, caractéristique des bétons fluides.

Le Ca-PNS donne des valeurs de "slump" similaires à celles obtenues pour le Mg-PNS.

L'effet d'un agent épaississant tel que le HEC ajouté au Ca-PNS pour éviter le phénomène de sédimentation provoque une diminution significative de l'effet fluidifiant comparé au Mg-PNS.

En conclusion et selon les différents essais réalisés, on remarque que l'adjuvant Mg-PNS à des concentrations pour lesquelles il permet d'obtenir une fluidification satisfaisante, permet en outre de diminuer la sédimentation à des niveaux acceptables, et cela plus particulièrement pour des conglomérats qui contiennent une fraction élevée de granulats et qui présentent en conséquence une tendance plus élevée à la sédimentation.

De plus, on remarque que lorsqu'on ajoute en cours de malaxage du Mg-PNS sous forme liquide, en particulier sous forme d'une solution aqueuse à un conglomérat sous forme de pâte, ceci exerce à un niveau de sédimentation identique un effet fluidifiant supérieur par rapport à son ajout sous une autre forme ou selon un autre mode d'introduction, par exemple, par rapport à son ajout à l'eau de gâchage, avant d'introduire les composants au conglomérat, ou par rapport à un vrai mélange à sec de Mg-PNS, introduit sous forme pulvérulente avec le ciment, avant de former la pâte.

Les exemples illustrés ci-dessus ne se limitent pas à l'utilisation de l'additif Mg-PNS, mais sont valables pour tout additif issu d'une combinaison de Mg et d'adjuvant à effet dispersant. EXEMPLE 1 :

TABLEAU 1

| Mortier avec un rapport E/C de 0,5 | |
|---|---|
| Temps (min) | eau libre (% volumique) |
| | 1% MG PNS |
| 30 | 0,75 |
| 60 | 0,75 |
| 120 | 0,75 |
| 180 | 0,75 |

TABLEAU 2

| Mortier avec un rapport E/C de 0,6 | | |
|---|---|---|
| Temps (min) | eau libre (% volumique) | |
| | 0,5% Na-PNS | 0,5% Mg-PNS |
| 31 | 4,55 | 2,18 |
| 60 | 4,73 | 2,18 |
| 120 | 4,73 | 2,18 |

## TABLEAU 2 (suite)

| Temps (min) | eau libre (% volumique) | |
|---|---|---|
| | 0,5% Na-PNS | 0,5% Mg-PNS |
| 180 | 4,73 | 2,18 |

EXEMPLE 2 :

## TABLEAU 3

| Mortier avec un rapport E/C = 0,5 | | Etalement Flow test |
|---|---|---|
| Additif | % | mm |
| | O | 147 |
| Na-PNS | 0,5 | 229 |
| | 1,0 | 220 |
| | 1,25 | 218 |
| Mg-PNS | 0,5 | 203 |
| | 1,0 | 222 |
| | 1,25 | 212 |

EXEMPLE 3 :

## TABLEAU 4

| Composition du mortier | Poids (kg/m$^3$) |
|---|---|
| Ciment (CPA 55-Villiers au Boin) | 270 |
| Charge (CaCO$_3$, MEAC) | 80 |
| Sable (inférieur à 5 mm) | 1700 |
| Eau | 186 |
| Adjuvant (même type et quantité) que dans le tableau 4 E/(C+F) | 0,53 |
| *E/(C+F) = eau/ciment+Charge (rapport pondéral) | |

## TABLEAU 5

| Adjuvant % | | Essai d'écoulement (mm) | Facteurs de sédimentation F |
|---|---|---|---|
| | 0 | 202 | - |
| Ca-PNS | 1,23 | 350 | 0,10 |
| Ca-PNS+HEC | 1,23 | 232 | 0,06 |
| Mg-PNS | 1,23 | 260 | 0,06 |
| Mg-PNS | 1,73 | 283 | 0,04 |
| Mg-PNS | 2,25 | 305 | 0,01 |

EXEMPLE 4 :

## TABLEAU 6

| Composition du béton | poids (kg/m$^3$) |
|---|---|
| Ciment (CPA 55-Villiers au Boin) | 270 |
| Charge (CaCO$_3$, MEAC) | 80 |
| Sable inférieur à 5 mm) | 800 |
| Gravier (5/15 mm) | 210 |
| Gravier (5/25 mm) | 770 |
| Eau | 200 |
| Adjuvant (quantités et conditions indiquées dans le tableau 5) | |

TABLEAU 6   (suite)

| Composition du béton | poids (kg/m$^3$) |
|---|---|
| E/(C+F)* | 0,57 |
| S/G** | 0,86 |
| F/C*** | 0,29 |
| * E/(C+F) = eau/ciment+charge | |
| ** S/G + sable/gravier (rapport pondéral) | |
| *** F/C = rapport pondéral charge/ciment | |

TABLEAU 7

| Adjuvant | % | Modalité d'addition | Sédimentation |
|---|---|---|---|
| Ca-PNS | 1,23 | Ajouté sous forme liquide (30 % d'extrait sec) à la fin du malaxage | On observe une couche de ciment durci d'environ 2 cm, dans laquelle aucun granulat n'est présent (sédimentation) |
| Mg-PNS | 0,37 | Ajouté sous forme de poudre au ciment | Aucune sédimentation n'est observée |
| Mg-PNS | 1,23 | Addition de liquide (30% extrait sec) dans l'eau de gâchage | Aucune sédimentation n'est observée |
| Mg-PNS | 1,23 | Addition de liquide (30% d'extrait sec) à la fin du malaxage | Aucune sédimentation n'est observée |

TABLEAU 8

| Adjuvant | (%) | Modalité d'introduction de l'adjuvant | Affaissement (cm) t = 0 |
|---|---|---|---|
| Sans adjuvant | | - | 8 |
| Mg-PNS | 0,37 | Ajout de poudre au ciment | 14 |
| Mg-PNS | 1,23 | Liquide, ajout dans l'eau de gâchage | 22 |
| Mg-PNS | 1,23 | Liquide, ajout en fin de malaxage | 23 |
| Ca-PNS | 1,23 | Liquide, ajout en fin de malaxage | 23 |
| Ca-PNS+ HEC | | Liquide, ajout en fin fin de malaxage | 18 |

**Revendications**

1. Additif anti-sédimentation pour conglomérats caractérisé en ce qu'il est obtenu par toute combinaison Mg et d'adjuvant à effet dispersant de telle sorte que ledit additif est un sel de Magnésium issu du produit de condensation entre l'acide béta-naphtalène-sulfonique et le formaldéhyde, entre la mélanine sulfonée et le formaldéhyde ou une combinaison entre Mg et Lignosulfonate.

2. Additif anti-sédimentation pour conglomérats selon la revendication 1, caractérisé en ce qu'il est utilisé dans des proportions allant de 0,1 à 4 % et de préférence de 0,2 à 1,5 % en poids du ciment.

3. Additif anti-sédimentation pour conglomérats selon la revendication 1, caractérisé en ce que pour des mortiers, il est utilisé dans des proportions comprises entre 0,3 et 1,5 % en poids du ciment.

4. Additif anti-sédimentation pour conglomérats selon la revendication 1, caractérisé en ce que la teneur en Mg-adjuvant à effet dispersant est d'au moins 1 %.

5. Additif anti-sédimentation pour conglomérats selon la revendication 1, caractérisé en ce que pour des bétons, il est utilisé dans des proportions comprises entre 0,3 et 1,25 % en poids du ciment.

6. Additif anti-sédimentation pour conglomérats selon la revendication 1, caractérisé en ce que ledit additif est rajouté à l'état liquide sous forme de solution aqueuse, plus particulièrement pour des bétons.

7. Additif anti-sédimentation pour conglomérats selon la revendication 6, caractérisé en ce ledit adjuvant est ajouté au conglomérat après la phase de malaxage.

8. Additif anti-sédimentation pour conglomérats selon la revendication 7, caractérisé en ce que ledit additif présente une concentration comprise entre 10 et 60% du poids et de préférence 30% en poids par rapport au poids de la solution.

9. Additif anti-sédimentation pour conglomérats selon la revendication 1, caractérisé en ce que ledit additif est mélangé à l'état sec à l'un des composants du conglomérat en particulier au ciment.

10. Additif anti-sédimentation pour conglomérats selon la revendication 9, caractérisé en ce que lorsque l'additif est mélangé à l'état sec, il présente une granulométrie comprise entre 0,1 et 500 microns et de préférence entre 0,1 et 100 microns.

11. Additif anti-sédimentation pour conglomérats selon la revendication 1, caractérisé en ce que ledit additif peut être incorporé sous forme de poudre.

12. Additif anti-sédimentation pour conglomérats selon la revendication 1, caractérisé en ce que ledit additif peut être ajouté à l'eau de gâchage avant formation de la pâte et ensuite mélangé aux autres composantes, plus particulièrement pour les mortiers.

FIGURE 1

FIGURE 2

FIGURE 3

EP 0 770 585 A1

**Office européen**
**des brevets**

**RAPPORT DE RECHERCHE EUROPEENNE**

Numero de la demande

EP 96 40 2274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X | EP-A-0 307 997 (PUMPTECH N.V.)<br><br>* revendications 1-4 *<br>* page 2, ligne 50 - page 3, ligne 19 *<br>--- | 1-9,11, 12 | C04B24/16 |
| X | CHEMICAL ABSTRACTS, vol. 96, no. 22, 31 Mai 1982 Columbus, Ohio, US; abstract no. 186259, "Effect of surfactants on the formation of coagulation structures in suspebsions of raw material cement slurry" XP002008320<br>* abrégé *<br>& UKR. KHIM. ZH. (RUSS. ED.), vol. 48, no. 1, 1982, pages 24-28,<br>--- | 1 | |
| D,A | GB-A-2 057 418 (KAO SOAP COMPANY)<br>* le document en entier *<br>--- | 1-12 | |
| A | BE-A-847 038 (COMPAGNIE DES CIMENTS BELGES)<br>* page 2, alinéa 2 *<br>* page 3, alinéa 3 *<br>* page 5, ligne 4 - ligne 5 *<br>--- | 1 | **DOMAINES TECHNIQUES RECHERCHES (Int.Cl.6)**<br><br>C04B |
| A | US-A-4 391 645 (MARCELLIS & AL.)<br>* colonne 1, ligne 6 - ligne 9 *<br>* colonne 2, ligne 30 - ligne 38 *<br>* colonne 4, ligne 24 - ligne 28 *<br>--- | 1 | |
| A | US-A-4 659 750 (SEDILLO & AL.)<br>--- | | |
| A | US-A-4 725 665 (PIEH & AL.)<br>----- | | |

Le présent rapport a été établi pour toutes les revendications

| Lieu de la recherche | Date d'achèvement de la recherche | Examinateur |
|---|---|---|
| LA HAYE | 30 Décembre 1996 | Rigondaud, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

13